Europäisches Patentamt

European Patent Office

Office européen des brevets

(19)

(11) **EP 1 256 278 A1**

(12) **EUROPEAN PATENT APPLICATION**
published in accordance with Art. 158(3) EPC

(43) Date of publication:
**13.11.2002 Bulletin 2002/46**

(21) Application number: **01900272.4**

(22) Date of filing: **09.01.2001**

(51) Int Cl.[7]: **A01N 59/00**, C02F 1/50,
A01K 63/04

(86) International application number:
**PCT/JP01/00034**

(87) International publication number:
**WO 01/050863 (19.07.2001 Gazette 2001/29)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.01.2000 JP 2000003583**

(71) Applicant: **Tateho Chemical Industries Co., Ltd.
Ako-shi, Hyogo 678-0239 (JP)**

(72) Inventors:
• **Hiratsu, Yutaka, Tateho Chemical Ind. Co., Ltd.
Ako-shi, Hyogo 678-0239 (JP)**

• **Handa, Tadahiko, Tateho Chemical Ind. Co., Ltd.
Ako-shi, Hyogo 678-0239 (JP)**
• **Kiyokawa, Toshio,
Tateho Chemical Ind. Co., Ltd.
Ako-shi, Hyogo 678-0239 (JP)**

(74) Representative: **Becker Kurig Straus
Patentanwälte
Bavariastrasse 7
80336 München (DE)**

(54) **PHYTOPLANKTON GROWTH INHIBITORS AND METHOD OF WATER PURIFICATION WITH THE USE OF THE SAME**

(57)    The purpose of the present invention is to provide a simple phytoplankton growth inhibitor for reducing the causes of eutrophication such as phosphorous compounds in the water to reduce phytoplankton and water bloom, and to a water purification method for a closed water system. This purpose can be accomplished by containing 10-35 % by mass of peroxide, especially calcium peroxide and/or magnesium peroxide based on the total mass of the phytoplankton growth inhibitor. The effect is more enhanced when it further contained 0.01-15 % by mass of at least one iron compound (s) selected from iron salt, iron oxide and iron hydroxide in terms of iron (Fe) based on the total mass of the phytoplankton growth inhibitor.

EP 1 256 278 A1

**Description**

Technical Field

The present invention relates to phytoplankton growth inhibitors for improving the water quality of closed water systems by reducing phytoplankton growing in closed water systems in particular lakes, marshes and ponds, and to a water purification method using the same. Here, a closed water system refers to a water system which cannot improve on its own water quality by the inflow or outflow of water, and which is susceptible to the accumulation of contaminants due to the low frequency of water replacement. Closed water systems include the stagnant water around river estuaries, canals, inland bays and inland seas in addition to the above-mentioned lakes, marshes and ponds.

Background Art

The problem of water pollution caused by eutrophication is becoming a serious problem in lakes, marshes and ponds at parks, and golf courses. One of the possible causes of this eutrophication is the runoff of phosphorous compounds contained in domestic waste water, particularly laundry waste water, or nitrogen compounds in fertilizers sprayed in fields and over golf course grass, into lakes, marshes and ponds. Eutrophication causes abnormal growth of phytoplankton in lakes, marshes and ponds, as well as generation of water bloom. As eutrophication progresses, dissolved oxygen runs short, and survival of aquatic animals becomes difficult. In addition, it also impairs aesthetic beauty while also generating foul odors. Moreover, since it could cause abnormal growth of algae that might interfere with the navigation of marine vessels on lakes and marshes, then this not only leads to environmental problems but it might also presents the risk of economic problems.

Restricting the amounts of phosphorous components and nitrogen components that cause eutrophication is known to be effective for inhibiting the growth of phytoplankton and algae. Nitrogen components can be reduced by their decomposition into molecular nitrogen due to the action of bacteria which carries out denitrification. However, since this type of denitrification action occurs only when there is hardly any dissolved oxygen in the water, it is difficult to employ this method in water systems in which dissolved oxygen is present. Thus, there is currently no alternative but to rely on methods that reduce phosphorous components as realistic methods for inhibiting the growth of phytoplankton and algae.

Phosphorous components are present in water in the form of phosphate ions, and known examples of means for removing them include coagulating sedimentation and crystallization dephosphorization. However, since these techniques require special apparatuses as well as considerable costs for operating these apparatuses, they are not methods which are considered to be easily realized.

On the other hand, in consideration of the problem of poor water quality of closed water systems such as lakes, marshes and ponds in recent years, several inventions have been disclosed employing to comparatively easy methods of water purification. For example, Japanese Provisional Patent Publication No. 178996/1994 discloses an invention of a method of removing phytoplankton growing in closed water regions, providing a filamentous green algae pond in which filamentous green algae are fixed and grown, and after introducing the water of a closed water region and bring it into contact, the water is collected to the above closed water region. This invention is indicated as being able to remove the nitrogen and phosphorous sources in the water as well by the photosynthesis reaction of the above filamentous green algae by using solar energy. In this invention, although there is no need for an expensive water purification apparatus, but it requires a large water feed pump for introducing water from the closed water region and returning it to that closed water region along with the installation of a large filamentous green algae pond, separately, purification costs are expected to be considerable.

In addition, Japanese Provisional Patent Publication No. 263530/1998 discloses an invention in which porous concrete and phosphorous adsorbing blocks, comprised of calcined mixture of volcanic ash and ferrous sulfate, are installed in a lake, marsh or pond. According to this invention, denitrification and dephosphorization effects are obtained simply by placing the above concrete and adsorbing blocks in the lake, marsh or pond desired to be purified. However, since concrete blocks are required at 1.5 vol% or more of the volume for water to be treated, while adsorbing blocks are required at 10 vol% or more of the above concrete blocks, it is necessary to place an extremely large amount of concrete in the water for lakes, marshes and ponds having a large volume of water, thereby making the use of this invention difficult from the viewpoint of water purification costs. In addition, since the composition of the purifying agent contained in the volcanic ash is likely to change depending on the origin of the volcanic ash, it is likely to be difficult to demonstrate stable effects.

Moreover, Japanese Provisional Patent Publication No. 143328/1997 discloses an invention of an organic material-based water purification agent comprised of a polyvinyl alcohol-based water-containing gel. This invention is targeted for use in comparatively small closed water systems such as swimming pools, bathtubs, ponds and aquariums, and it is not clear as to whether it can be applied practically to lakes, marshes and so forth that contains large volume of water in terms of cost. In addition, since there is also the potential risk of organic material dissolving into the water to be treated, it is also thought to be necessary to confirm the safety with respect to its effects.

On the other hand, oxygen generators having peroxide as their main ingredient are known to be able to effectively treat sludge by increasing the concentration of dissolved oxygen in water, and particularly supplying oxygen inside sludge that has accumulated on the bottoms of farming ponds and so forth. These inventions are disclosed in, for example, Japanese Provisional Patent Publications Nos. 120055/1976, 683/1977 and 261600/1985.

In addition, numerous inventions have also been disclosed pertaining to these oxygen generators per se. One example is the oxygen generator invented by the present inventors (Japanese Provisional Patent Publication No. 301605/1996), which is composed of calcium peroxide-calcium carbonate-calcium hydroxide-calcium phosphate. Although oxygen generators are known to be effective in the treatment of sludge on the bottom of farming ponds; however, their effectiveness is unknown, in inhibiting the growth of green algae representing phytoplankton or algae growing in lakes, marshes and ponds, or their effectiveness in reducing phosphorous and nitrogen components. Hardly any studies or research have been conducted regarding this question. Thus, it remains unclear as to whether or not oxygen generators have effects against water pollution accompanying eutrophication.

Disclosure of the Invention

As described above, the known technologies of the prior arts relating to water purification for lakes, marshes, ponds and other closed water systems are hardly considered to be used easily, including costs. In addition, with respect to water purification agents, although numerous inventions have been disclosed regarding oxygen generators for treating sludge accumulated on the bottom of water, reliable results indicating that they are effective in inhibiting the growth of phytoplankton have yet to be obtained.

With this in mind, an object of the present invention is to provide phytoplankton growth inhibitors, easy to use, capable of particularly reducing the phosphorous components in water that cause eutrophication, and as a result, inhibit the growth of phytoplankton and algae.

In addition, another object of the present invention is to provide phytoplankton growth inhibitors that do not have detrimental effects on aquatic animals residing in lakes, marshes and ponds and are able to maintain their effect over a long period of time, as well as to provide phytoplankton growth inhibitors that are capable of demonstrating considerable effects even used in small amounts with regard to their effects on water purification costs and the environment. Moreover, another object of the present invention is to provide a water purification method for closed water systems that uses these phytoplankton growth inhibitors.

As a result of conducting earnest research on the mechanism of water pollution accompanying eutrophication, the present invention provides that peroxides are effective as a means for solving the above problems. In particular, the present invention provides calcium peroxide and/or magnesium peroxide to be effective along with the amounts of peroxides at which those effects are demonstrated, thereby leading to the completion of the present invention pertaining to phytoplankton growth inhibitors. The term % by mass indicated in the present invention refers to the percentage by mass with respect to concentration, and is based on the total amount of phytoplankton growth inhibitors herein.

In addition, the present invention provides that, if at least one iron compound(s) selected from iron salt, iron oxide and iron hydroxide is/are contained at 0.01-15% by mass in terms of iron (Fe) based on the total mass of phytoplankton growth inhibitor, phytoplankton growth inhibitory effects can be enhanced even in the ponds in which there is little accumulation of sediment. In addition, it also provides that these iron compounds may be contained in that amount into the phytoplankton growth inhibitors of the present invention that contain calcium peroxide, and that they may also be used in combination with phytoplankton growth inhibitors containing peroxides by separately preparing those iron compounds.

Moreover, in addition to that the use of the above-mentioned phytoplankton growth inhibitors having a considerable effect on improving the water quality of closed water systems, the present invention have also clearly determined the supplied amount of oxygen required for improving water quality according to whether or not the closed water system has sludge corresponding to the level of water quality of the closed water system. Namely, the present invention provides a water purification method for a closed water system where bottom sludge exists in which peroxides are to exist that generates oxygen in an amount Y ($m^3$/l $m^3$ of water to be treated) per day so as to satisfy the equation: $Y \geqq 3^x \cdot 10^{-9}$ on the bottom of a closed water system based on the water quallity of a closed water system in which the pH is made X. In addition, the present invention provides a water purification method for a closed water system where no bottom sludge exists in which peroxides are to exist that generates oxygen in an amount Y ($m^3$/l $m^3$ of water to be treated) per day so as to satisfy the equation: $Y \geqq 3^{(X+0.5)} \cdot 10^{-9}$ on the bottom of a closed water system based on the water quality of a closed water system in which the pH is made X.

Brief Description of the Drawings

Fig. 1 is a graph showin'g the relationship between the pH: X of a closed water system being treated and the amount of oxygen: Y ($m^3/l$ $m^3$ of water to be treated) per day required to improve water quality in a closed water system in which bottom sludge exist.

Fig. 2 is a graph showing the relationship between the pH: X of a closed water system being treated and the amount of oxygen: Y ($m^3/l$ $m^3$ of water to be treated) per day required to improve water quality in a closed water system in which no bottom sludge exists.

Best Mode for Carrying Out the Invention

The present invention is based on the finding that eutrophication takes place according to the mechanism described below, these findings leading to completion of the present invention.

Numerous nitrogen components become salt of nitrates, and as a result they are transported in water in the dissolved state. On the other hand, since phosphorous components are easily adsorbed onto soil particles, they flow into lakes, marshes and ponds accompanying sediment in the surface flow, accumulate on the bottom and become phosphate ions. If sufficient amount of adequate dissolved oxygen is present, bivalent iron ions dissolved from the soil are oxidized to trivalent iron ions by the dissolved oxygen, and in turn react with phosphate ions in the water resulting in the formation of a coprecipitating compound that accumulates on the bottom. However, on the bottom where eutrophication has progressed, the organic substance on the bottom increases, and dissolved oxygen is consumed by decomposition of this organic substance. Accordingly, dissolved oxygen is depleted near the bottom, and it becomes difficult for phosphate ions to react with trivalent iron ions. Consequently, iron is dissolved into the water in the form of bivalent iron ions and since phosphate ions are also present in the water at the same time, they end up again being used for the growth of phytoplankton.

Therefore, since the introduction of an oxygen generator near the bottom makes it possible to supply a large amount of dissolved oxygen, bivalent iron ions are oxidized to trivalent iron ions and form a coprecipitating compound with phosphate ions, thereby enabling the amount of phosphate ion to reduce. As a result, the phosphate components in the water decrease, thereby making it possible to inhibit the growth of phytoplankton and algae.

However, in order to maintain this effect of inhibiting the growth of phytoplankton, it is necessary that the oxygen generator be able to release oxygen over a long period of time. Therefore, the phytoplankton growth inhibitors of the present invention, which fulfill the role of an oxygen generator, have peroxide as their essential ingredient, and to this is added, for example, calcium carbonate and/or calcium hydroxide. Although at least one peroxide(s) selected from among calcium peroxide or magnesium peroxide is/are preferably used for the peroxide(s), other peroxides such as potassium peroxide or sodium peroxide may also be used. In addition, calcium carbonate and calcium hydroxide are contained for a purpose of preventing the violent reaction between calcium peroxide or magnesium peroxide and water, and enable oxygen to be released over a long period of time. Thus, compounds capable of stabilizing the reaction of calcium peroxide or magnesium peroxide can be used in their place. Examples of such compounds include magnesium carbonate and magnesium hydroxide.

The composition of the phytoplankton growth inhibitors is such that they contain at least one peroxide(s) selected from among, for example, calcium peroxide and magnesium peroxide, at 10-35% by mass, preferably 15-30% by mass, and most preferably 20-25% by mass.

There are no particular limitations on other components of the composition. For example, one example of a phytoplankton growth inhibitor contains 15-35% by mass of calcium carbonate and 40-65% by mass of calcium hydroxide. Moreover, in addition to calcium carbonate and calcium hydroxide, other unavoidably contaminating impurities and other components that do not lead to eutrophication, such as compounds other than phosphides and sulfides, may also be contained provided the peroxide content is within the range of the present invention.

In addition, the phytoplankton growth inhibitory effects of the present invention are further enhanced if an iron compound, and preferably at least one iron compound(s) selected from among iron salt, iron oxide and iron hydroxide, is/are contained within the range of 0.01-15% by mass, preferably 0.02-10% by mass, and most preferably 0.05-2% by mass, in terms of iron. This applies to cases in artificially created ponds, such as the ponds on golf courses, in which there is little accumulation of sediment due to rubber being laid over the bottom of the pond. In such ponds, since the amount of bivalent iron ions that dissolve from the sediment is inherently low, even if a phytoplankton growth inhibitor is added, coprecipitation with phosphate ions occurs with difficulty to the low level of oxidized trivalent iron ions. Since phytoplankton growth inhibitors containing calcium peroxide form coprecipitating compounds due to the reaction between calcium ions and phosphate ions, they inherently have the effect of removing phosphorous. However, since the reaction rate between calcium ions and phosphate ions is slower than the reaction rate between trivalent iron ions and phosphate ions, the removal rate of phosphorous by calcium ions is slower than that by trivalent iron ions. Thus, even if the above phytoplankton growth inhibitors of the present invention are added directly to a pond in which there is little accumulation of sediment, due to the low level of trivalent iron ions, it is impossible to effectively reduce phosphorous components.

Therefore, by containing an iron compound in the phytoplankton growth inhibitor of the present invention in advance, or by preparing an iron compound in advance and using in combination with the phytoplankton growth inhibitor of the present invention, phosphorous components can be efficiently reduced if the amount of trivalent iron compounds in the water is increased. In this case, the iron compound may be a compound that generates bivalent iron ions or trivalent iron ions. This is because, since the peroxide contained in the phytoplankton growth inhibitor oxidizes bivalent iron ions to trivalent iron ions, even if the iron compound generates bivalent iron ions, it is able to reduce phosphorous components in the same manner as an iron compound that generates trivalent iron ions. Furthermore, iron phosphate and iron sulfide are not preferable as iron compounds since they form phosphate ions that cause eutrophication and sulfide ions that cause the foul smells of sludge.

In a preferable mode for carrying out the present invention, various powders are used for the raw material that has a particle size of 0.1-1 mm. In addition, production of the phytoplankton growth inhibitors is carried out by forming or molding the raw material powder mixture into granules using a known granulation method such as extrusion granulation or agitation granulation, or by a known molding method such as uniaxial press molding. The use of these granulation methods or molding methods makes it possible to obtain a solid product from the raw material mixture having a particle size of several millimeters. As a result, in addition to facilitating handling when spraying the phytoplankton growth inhibitor and so forth, the contact surface area with the water to be treated increases, thereby making this a preferable form during water purification. In addition, since this solid has microscopic spaces formed inside, all of the contained peroxide can be used effectively. Moreover, since the specific gravity of the phytoplankton growth inhibitors of the present invention is $1.67 \times 10^3$ kg/m$^3$, it sinks in the water when added to lakes, marshes and so forth causing it to exist on the bottom which results in preferable effects for purification of the water to be treated.

Examples

The following provides an explanation of the invention pertaining to phytoplankton growth inhibitors of the present invention using its examples.

Example 1

5.0 kg of the phytoplankton growth inhibitors of the present invention (Nos. 1 through 4) having the compositions shown in Tables 1 and 2 were added to 1 m$^3$ of an aqueous solution having a phosphorous concentration of $0.65 \times 10^{-3}$ kg/m$^3$ followed by monitoring the changes over time in the phosphate ion concentration of the aqueous solution at that time. Furthermore, each component is represented in terms of % by mass, and the remainder consists of water and other unavoidable impurities. Here, No. 1 is a phytoplankton growth inhibitor having calcium peroxide for its main ingredient, and No. 2 is the phytoplankton growth inhibitor of No. 1 to which has 0.002 kg of bivalent iron chloride tetrahydrate in terms of iron (0.04% based on the total mass of the phytoplankton growth inhibitor) was added. In addition, No. 3 is the phytoplankton growth inhibitor of No. 1 to which 0.002 kg of trivalent iron chloride hexahydrate in terms of iron (0.04% based on the total mass of the phytoplankton growth inhibitor) was added. In addition, No. 4 is a phytoplankton growth inhibitor having magnesium peroxide for its main ingredient, but does not contain iron chloride.

Table 1

| No. | CaO$_2$ | Ca(OH)$_2$ | CaCO$_3$ | FeCl$_2$ | FeCl$_3$ |
|-----|---------|------------|----------|----------|----------|
| 1 | 24.74 | 48.78 | 24.96 | - | - |
| 2 | 24.74 | 48.78 | 24.96 | 0.04 | - |
| 3 | 24.74 | 48.78 | 24.96 | - | 0.04 |
| 5 | - | - | - | - | - |
| 6 | - | - | - | 0.04 | - |
| 7 | - | 99.20 | - | 0.04 | - |

Table 2

| No. | $MgO_2$ | $Mg(OH)_2$ | $MgCO_3$ | $FeCl_2$ | $FeCl_3$ |
|---|---|---|---|---|---|
| 4 | 21.36 | 47.84 | 29.12 | - | - |

Here, the phosphate ion concentrations were measured by the ascorbic acid method using the Model DR/700 highspeed water quality analyzer made by HACH. Namely, the phosphate ions are allowed to react with the molybdic acid in an acidic solution to form a phosphorous-molybdic acid complex. At this time, the ascorbic acid reduces this complex and generates a molybdenum blue color. The phosphate ion concentration can then be measured by measuring its absorbance with the DR/700.

On the other hand, Nos. 5 through 7 are comparative examples that do not contain calcium peroxide, and these comparative examples have the compositions shown in Table 1. No. 5 indicates a case where no chemicals are added. No. 6 indicates a case where 0.002 kg (0.04%) of only bivalent iron chloride tetrahydrate was added in terms of iron. In addition, No. 7 indicates a case where 2.5 kg of calcium hydroxide and 0.002 kg (0.04%) of bivalent iron chloride tetrahydrate was added in terms of iron.

The results of the changes over time in phosphate ions (as converted to phosphorous concentration) are shown in Table 3. In a case where only iron was added in No. 6, there was no effect of phosphate ion concentration being reduced in the aqueous solution observed whatsoever. In addition, in the case of No. 7 in which a chemical was added containing calcium hydroxide and iron ions, although the phosphate ion concentration in the aqueous solution was observed to decrease, the of that decrease was determined to be extremely slow. In contrast, in a case of No. 1 where a phytoplankton growth inhibitor containing calcium peroxide of the scope of the present invention was added, the initial phosphorous concentration of $0.65 \times 10^{-3}$ $kg/m^3$ decreased to $0.06 \times 10^{-3}$ $kg/m^3$ after the passage of $432 \times 10^3$ s, namely 5 days, thus demonstrating considerable effectiveness in reducing phosphate ion concentration. In addition, in the case of using the phytoplankton growth inhibitor containing calcium peroxide in combination with an iron compound (Nos. 2 and 3), the rate of decrease of phosphate ion concentration was accelerated, thereby clearly demonstrating that the iron compound was more effective in reducing phosphate ions. Moreover, in a case of No. 4 where a phytoplankton growth inhibitor containing magnesium peroxide was added, phosphate ion reducing effects were observed as in No. 1 where phytoplankton growth inhibitor containing calcium peroxide was added.

Table 3

| | Elapsed time ($10^3$s) | | 0 | 86.4 | 172.8 | 432 |
|---|---|---|---|---|---|---|
| Experiment contents (Additives) | | | P concentration $10^{-3}kg/m^3$ | | | |
| No. 1 | $CaO_2$ growth inhibitor | | 0.65 | 0.52 | 0.35 | 0.06 |
| No. 2 | $CaO_2$ growth inhibitor + $FeCl_2$ | | 0.66 | 0.52 | 0.26 | 0.01 |
| No. 3 | $CaO_2$ growth inhibitor + $FeCl_3$ | | 0.66 | 0.47 | 0.27 | 0.01 |
| No. 4 | $MgO_2$ growth inhibitor | | 0.66 | 0.51 | 0.40 | 0.09 |
| No. 5 | No addition of growth inhibitor | | 0.66 | 0.67 | 0.68 | 0.67 |
| No. 6 | $FeCl_2$ | | 0.67 | 0.68 | 0.70 | 0.71 |
| No. 7 | $Ca(OH)_2+FeCl_2$ | | 0.66 | 0.59 | 0.54 | 0.42 |
| Note: The values in Table 3 show phosphate ion concentrations converted into phosphorous concentration. | | | | | | |

Example 2

60 kg of a phytoplankton growth inhibitor of the present invention having the composition shown in Table 4 (each component is represented in terms of % by mass and the remainder consists of water and other unavoidable impurities) were uniformly sprayed over the entire surface of a pond covering an area of 600 $m^2$ and having an average depth of 0.9 m using a power (sprayer. The amount of the phytoplankton growth inhibitor sprayed was $111 \times 10^{-3}$ $kg/m^3$. The changes of pH, dissolved oxygen (DO) concentration ($10^{-3}$ $kg/m^3$) and transparency (m) of this golf course pond were then measured in terms of the number of days after spraying of the phytoplankton growth inhibitor.

Table 4

| CaO$_2$ | 24.06 |
|---|---|
| Ca(OH)$_2$ | 48.78 |
| CaCO$_3$ | 25.21 |

Here, pH and DO concentration were measured using the Model WQC-22A water quality checker made by Toa Dempa Kogyo Co., Ltd. Namely, pH was measured using the glass electrode method, while DO was measured using the membrane-type galvanic cell method. In addition, transparency was measured using a transparency meter having a total length of 1 m, looking through the water from above the water surface, and measuring the height at which the cross hair pattern on the bottom could be clearly distinguished. Since the phytoplankton growth inhibitors of the present invention sink to the bottom, oxygen can be generated from the bottom. The results of this measurement are shown in Table 5.

Table 5

| Elapsed time ($10^3$ s) | Transparency (m) | pH | DO ($10^{-3}$kg/m$^3$) |
|---|---|---|---|
| Before spraying | 0.31 | 9.15 | 16.12 |
| Immediately after spraying 0 | 0.31 | 9.85 | 18.45 |
| 605 (7th day) | 0.48 | 10.18 | 16.28 |
| 1210 (14th day) | 0.61 | 9.22 | 12.33 |
| 1814 (21st day) | 0.63 | 7.94 | 8.57 |
| 2419 (28th day) | 0.52 | 9.35 | 12.11 |
| 3024 (35th day) | 0.83 | 7.93 | 6.95 |
| 3629 (42nd day) | 0.78 | 9.04 | 13.49 |

Changes in phytoplankton can be determined from the changes in pH and the dissolved oxygen concentration shown in Table 5. Namely, since phytoplankton consumes carbon dioxide and provide oxygen by photosynthesis, if the pH and dissolved oxygen concentration are high, the amount of phytoplankton is large, while conversely, if these values are low, the amount of phytoplankton is small. Based on the results shown in Table 5, both pH and DO decreased maximally 35 days after spraying the above growth inhibitor, and the amount of phytoplankton can be seen to have decreased. As a result, the transparency of only 0.31 m prior to the spraying was improved to 0.83 m, having the effect of improving transparency being by about 2.7 times. Thus, use of the phytoplankton growth inhibitor of the present invention reduced the amount of phytoplankton, with result confirming progress of purification of the pond.

Example 3

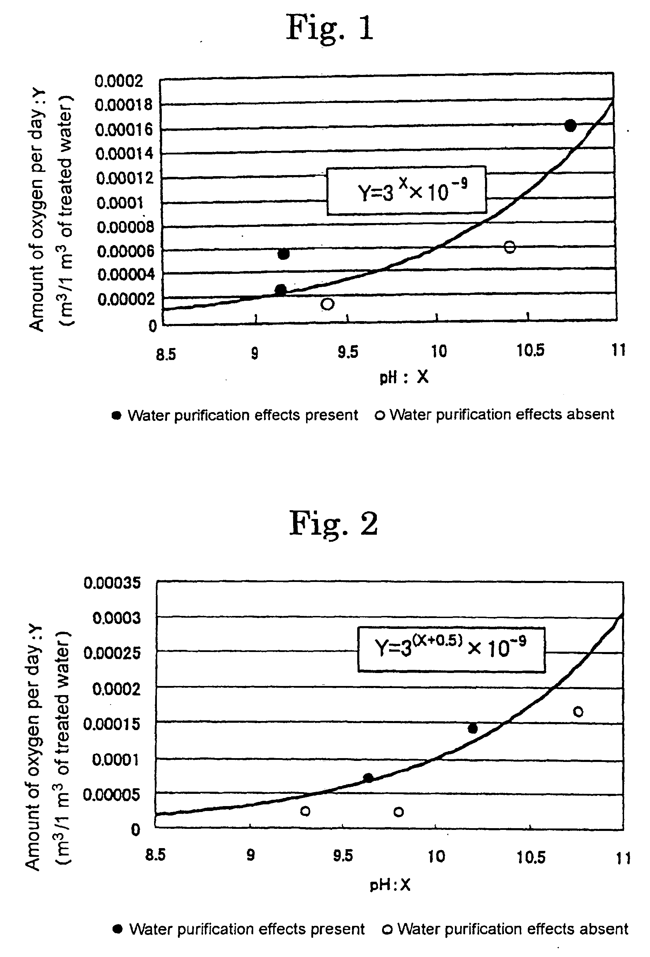

The amount of oxygen generated per day and the presence or absence of water purification effects were monitored for a unit volume (1 m$^3$) of water treated by adding peroxide to the bottom of a pond having a water volume of 10 m$^3$ and various degrees of pollution indicated with pH: X in which bottom sludge existed. Those results are shown in Fig. 1. Here, cases where the water was purified are indicated with black dots, while cases where water was not purified are indicated with white dots. Furthermore, the presence or absence of water purification effects was judged according to whether or not the transparency of the pond increased two-fold two weeks after the addition of peroxide.

As is clear from Fig. 1, in case the pH (pollution) of the treated pond is high, the generated oxygen amount required for water purification is high. In addition, a good correlation is observed between the pH of pond and required amount of generated oxygen, and in order to purify the water of a water system having a pH of X, the required amount of generated oxygen Y (m$^3$/l m$^3$ of water to be treated) per day is clearly $Y \geqq 3^x \cdot 10^{-9}$.

Example 4

The amount of oxygen generated per day and the presence or absence of water purification effects in a unit volume (1 m$^3$) of water to be treated were monitored by adding peroxide to the bottom of a pond having a water volume of about 10 m$^3$ and various degrees of pollution indicated with pH: X in the same manner as Example 3 with the exception of monitoring the case where no bottom sludge existed. Those results are shown in Fig. 2. In this case, in order to purify the water of a water system in which pH is X, the required amount of generated oxygen Y per day was clearly $Y \geqq 3^{(X+0.5)} \cdot 10^{-9}$.

Industrial Applicability

As has been described above, the phytoplankton growth inhibitors containing peroxide of the present invention reduce phosphate ion concentration in aqueous solution, and when iron is contained within the range of the present invention, the rate of the decrease in phosphate ion concentration can be increased. In addition, when the phytoplankton growth inhibitors of the present invention were added to an actual pond having low transparency, both pH and DO decreased and as a result, a remarkable improvement in transparency was achieved. Moreover, the present invention clearly identified the required amount of oxygen generated in order to purify water with respect to the degree of water pollution of a closed water system. In addition, the phytoplankton growth inhibitors of the present invention are a kind of solid oxygen generator, and have been recognized to also have known sludge treatment effects.

Thus, the present invention also demonstrates significant economic effects since it is capable of inhibiting eutrophication that causes the significant problem of environmental pollution problems which in turn cause growth of phytoplankton, easily and also without having detrimental effects on aquatic life.

**Claims**

1.   Phytoplankton growth inhibitors **characterized in that** a peroxide is contained.

2.   The phytoplankton growth inhibitors according to claim 1, wherein the peroxide is at least one peroxide(s) selected from the group consisting of calcium peroxide and magnesium peroxide.

3.   The phytoplankton growth inhibitors according to claim 1 or 2, wherein the content of the peroxide is 10-35 % by mass based on the total mass of the phytoplankton growth inhibitor.

4.   The phytoplankton growth inhibitors according to any one of claims 1 to 3, wherein the phytoplankton growth inhibitors additionally contain an iron compound.

5.   The phytoplankton growth inhibitors according to claim 4, wherein the iron compound is at least one iron compound (s) selected from the group consisting of iron salt, iron oxide and iron hydroxide.

6.   The phytoplankton growth inhibitors according to claim 4 or 5, wherein the content of the iron compound is 0.01-15 % by mass in terms of iron based on the total mass of the phytoplankton growth inhibitor.

7.   A water purification method, wherein the phytoplankton growth inhibitor according to any one of claims 1 to 6 is used in a closed water system.

8.   A water purification method **characterized in that** either a peroxide alone or a peroxide with an iron compound is to exist in a closed water system.

9.   A water purification method, in a closed water system where bottom sludge exists, **characterized in that** a peroxide is or peroxides are to exist which generate(s) oxygen in an amount Y ($m^3$/l $m^3$ of water to be treated) per day so that the following equation (I) is satisfied when a pH of a water quality in the closed water system is made X.

$$Y \geqq 3^{X} \cdot 10^{-9} \tag{I}$$

10.   A water purification method, in a closed water system where no bottom sludge exists, **characterized in that** a peroxide is or peroxides are to exist which generate(s) oxygen in an amount Y ($m^3$/l $m^3$ of water to be treated) per day so that the following equation (II) is satisfied when a pH of a water quality in the closed water system is made X.

$$Y \geqq 3^{(X+0.5)} \cdot 10^{-9} \tag{II}$$

# Fig. 1

● Water purification effects present    ○ Water purification effects absent

# Fig. 2

● Water purification effects present    ○ Water purification effects absent

## INTERNATIONAL SEARCH REPORT

| | International application No. |
|---|---|
| | PCT/JP01/00034 |

| A. CLASSIFICATION OF SUBJECT MATTER |
|---|
| Int.Cl⁷ A01N59/00, C02F1/50, A01K63/04 |

According to International Patent Classification (IPC) or to both national classification and IPC

| B. FIELDS SEARCHED |
|---|
| Minimum documentation searched (classification system followed by classification symbols)<br>    Int.Cl⁷   A01N59/00, C02F1/50, A01K63/04 |
| Documentation searched other than minimum documentation to the extent that such documents are included in the fields searched |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP, 50-34987, A (NAGASE & CO., LTD.),<br>03 April, 1975 (03.04.75),<br>Claims; pages 1 to 2, upper right column; page 3, upper right column   (Family: none) | 1-3,7-10<br>4-6 |
| X<br>A | JP, 49-27799, B1 (Nippon Peroxide Co., Ltd.),<br>20 July, 1974 (20.07.74),<br>Claims; page 2   (Family: none) | 1-3,7-10<br>4-6 |
| X<br>A | JP, 51-120055, A (Nippon Peroxide Co., Ltd.),<br>21 October, 1976 (21.10.76),<br>Claims; page 1   (Family: none) | 7-10<br>1-6 |
| X<br>A | JP, 3-255008, A (Katayama Kagaku Kogyo Kenkyusho K.K.),<br>13 November, 1991 (13.11.91),<br>Claims; page 1; page 3, lower left column; example<br>(Family: none) | 1,3-10<br>2 |
| X<br>A | JP, 3-45503, A (Onoda Autoclaved Lightweight Concrete Co.,<br>Ltd.),<br>27 February, 1991 (27.02.91),<br>Claims; example   (Family: none) | 1,3-10<br>2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    22 March, 2001 (22.03.01) | Date of mailing of the international search report<br>    03 April, 2001 (03.04.01) |
|---|---|
| Name and mailing address of the ISA/<br>    Japanese Patent Office | Authorized officer |
| Facsimile No. | Telephone No. |

Form PCT/ISA/210 (second sheet) (July 1992)

10

EP 1 256 278 A1

## INTERNATIONAL SEARCH REPORT

International application No.

PCT/JP01/00034

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP, 61-209285, A (Sumitomo Cement Co., Ltd., et al.),<br>17 September, 1986 (17.09.86),<br>Claims; page 1  (Family: none) | 1,3,7-10<br>2,4-6 |

Form PCT/ISA/210 (continuation of second sheet) (July 1992)